# EUROPÄISCHE PATENTSCHRIFT

(11) **EP 4 222 798 B1**
(45) Veröffentlichungstag und Bekanntmachung des Hinweises auf die Patenterteilung: **18.06.2025**
(21) Anmeldenummer: 21798556.3
(22) Anmeldetag: 23.09.2021
(51) Int. Cl.: H01M 4/86, H01M 8/0228, H01M 8/18, H01M 8/20

(54) **ELEKTRODE, REDOX-FLOW-ZELLE SOWIE REDOX-FLOW-BATTERIE**
ELECTRODE, REDOX FLOW CELL AND REDOX FLOW BATTERY
ÉLECTRODE, CELLULE À FLUX REDOX ET BATTERIE À FLUX REDOX

(30) Priorität: 30.09.2020 DE 102020125594; 22.09.2021 DE 102021124470
(43) Veröffentlichungstag der Anmeldung: 09.08.2023
(73) Patentinhaber: Schaeffler Technologies AG & Co. KG, 91074 Herzogenaurach (DE)
(72) Erfinder: DOBRENIZKI, Ladislaus, 91315 Höchstadt (DE); HULLIN, Gregor, 91052 Erlangen (DE); HERBST, Michael, 91086 Aurachtal (DE); HAAG, Bertram, 91486 Uehlfeld (DE); BRANDT, Sven, 91466 Gerhardshofen (DE); DOERRFUSS, Florian, 91074 Herzogenaurach (DE)
(86) Internationale Anmeldenummer: PCT/DE2021/100770
(87) Internationale Veröffentlichungsnummer: WO 2022/068993

(56) Entgegenhaltungen:
- WO-A1-2019/079047
- DE-B3- 102009 018 028
- US-A1- 2018 269 515
- SCHIZODIMOU AGORITSA ET AL: "Acceleration of the reduction of carbon dioxide in the presence of multivalent cations", ELECTROCHIMICA ACTA, vol. 78, 1 January 2012 (2012-01-01), pages 171 - 176, XP028931903, ISSN: 0013-4686, DOI: 10.1016/J.ELECTACTA.2012.05.118
- HU BO ET AL: "A pH-Neutral, Metal-Free Aqueous Organic Redox Flow Battery Employing an Ammonium Anthraquinone Anolyte", ANGEWANDTE CHEMIE, vol. 131, no. 46, 12 September 2019 (2019-09-12), DE, pages 16782 - 16789, XP055872938, ISSN: 0044-8249, Retrieved from the Internet <URL:https://onlinelibrary.wiley.com/doi/full-xml/10.1002/ange.201907934> DOI: 10.1002/ange.201907934

## Beschreibung

Die Erfindung betrifft eine Elektrode zur Anordnung in Kontakt zu einem Elektrolyten in einer Redox-Flow-Zelle, wobei die Elektrode umfassend ein Substrat ausgebildet ist, das aus einem Elektrodenmaterial in Form eines Metallblechs und/oder eines Streckmetallgitters gebildet ist. Die Erfindung betrifft weiterhin eine Redox-Flow-Zelle mit mindestens einer solchen Elektrode sowie eine Redox-Flow-Batterie.

Elektroden sowie damit ausgestattete Redox-Flow-Zellen, insbesondere Redox-Flow-Batterien oder Flussbatterien, sind hinreichend bekannt. Die Redox-Flow-Batterie ist ein Speicher für elektrische Energie, wobei die elektrische Energie in flüssigen chemischen Verbindungen beziehungsweise Elektrolyten, einem sogenannten Anolyt und einem sogenannten Katholyt, gespeichert vorliegt. Die Elektrolyte befinden sich in zwei Reaktionsräumen, die durch eine Ionenaustauschmembran voneinander getrennt sind. Über diese Membran erfolgt ein Ionenaustausch zwischen Anolyt und Katholyt, wobei elektrische Energie frei wird. Die frei werdende elektrische Energie wird über je eine Elektrode, die in Kontakt zum Anolyten und Katholyten steht, abgegriffen. Die Elektrolyte werden in den Reaktionsräumen mittels Pumpen jeweils zirkuliert und fließen an der jeweiligen zugewandten Oberfläche der Membran entlang. Da die Elektrolyte in beliebig groß ausgeführten Tanks gespeichert werden können, ist die in der Redox-Flow-Batterie gespeicherte Energiemenge nur von der Größe der verwendeten Tanks abhängig.

Flussbatteriesysteme als Speichersysteme ermöglichen eine nachhaltige Energieversorgung für stationäre und mobile Anwendungsfelder mittels erneuerbarer Energien. Um hohe Wirkungsgrade und Leistungsdichten zu erreichen, werden möglichst kompakte Zellaufbauten in Batteriestacks angestrebt. Hohe Leistungsdichten stellen jedoch große Herausforderungen an die einzelnen Komponenten eines Batteriestacks dar.

Die WO 2018/145720 A1 beschreibt eine Elektrodeneinheit sowie eine Redox-Flow-Batterie, in welcher diese Elektrodeneinheit eingesetzt wird. Dabei ist unter anderem beschrieben, das Substrat der Elektrodeneinheit aus einem Kompositmaterial auszubilden.

Die WO 2018/146342 A1 offenbart verschiedene Elektrolyt-Zusammensetzungen auf Lignin-Basis zur Verwendung für Redox-Flow-Batterien.

Die DE 10 2009 018 028 B3 offenbart eine Elektrode für elektrolytische Prozesse und damit ausgestattete Redoxbatterien. Die Elektrode besteht aus einem metallischen Träger, insbesondere Edelmetall-beschichtetem Titan- oder Kupferblech, mit einer damit verbundenen porösen, durchströmbaren Sintermetallschicht, insbesondere aus Sinterbronze. Die Sintermetallschicht trägt eine gesputterte, elektrisch leitende Graphitschicht. Die Sintermetallschicht kann weiterhin mit Kanälen zur Lenkung eines Strömungsverlaufs an der Elektrode versehen sein.

Die JP 2018 206 639 A offenbart eine Batterie, insbesondere eine Redoxflow-Batterie. Für die positiven und negativen Elektroden werden hier vorzugsweise Materialien verwendet, die in dem Potenzialbereich, in dem sie eingesetzt werden, elektrochemisch stabil sind. Die Form der positiven und negativen Elektroden ist nicht begrenzt und umfasst Gitter, poröses Material, perforiertes Metall, flache Platten und dergleichen. Zu den positiven und negativen Elektroden gehören Kohlenstoffelektroden wie Kohlefilz, Graphitfilz und Kohlepapier; Metallelektroden wie Metallplatten und Metallgitter aus Metallen oder Legierungen wie Titan, Zink, Edelstahl, Aluminium, Nickel, Kupfer und Bronze.

Die Veröffentlichung ''A biomimetic high-capacity phenazine-based anolyte for aqueous organic redox flow batteries", Aaron Hollas et al., Nature energy, Vol. 3, Juni 2018, Seiten 508 - 514, beschreibt Anolyte für Redox-Flow-Batterien auf Basis wässriger ''organischer'' Elektrolyte beziehungsweise auf Basis wässriger Elektrolyte mit einer redox-aktiven organischen Spezies. Diese gewinnen zunehmend an Bedeutung.

Derzeit werden als korrosionsbeständige Substrate für Elektroden von Redox-Flow-Batterien aufgrund der Verwendung stark basischer oder saurer Elektrolyte häufig plattenförmige Komposite aus Kunststoff und Graphit verwendet. Diese Substrate sind meist mit einer beidseitig aufgebrachten Kohlenstoffbeschichtung versehen oder es ist ein durchströmbarer Kohlenstoff-Filz zwischen der Membran und der Elektrode vorhanden. Eine Gesamtplattendicke der Elektrode im Bereich von etwa 0,7 - 1,2 mm ist dabei üblich. Solche Elektroden werden häufig in einem elektrisch isolierenden Kunststoffrahmen gehalten, was mit zusätzlichem Kostenaufwand für den Rahmen und das Montageverfahren verbunden ist. Die Größe und die Herstellungserfordernisse solcher Elektroden stehen einer platzsparenden und insbesondere kompakten Geometrie von Redox-Flow-Zellen und deren rationeller industrieller Fertigung derzeit im Wege. Auch hat sich gezeigt, dass nicht alle bisher für Redox-Flow-Zellen beschriebenen Elektrodenmaterialien gleich gut geeignet sind, dem chemischen Angriff in wässrigen organischen Elektrolyten zu widerstehen.

Zum technischen Hintergrund wird hier auf die Veröffentlichung ''Engineering aspects of the design, construction and performance of modular redox flow batteries for energy storage", L.F. Arenas et al., Journal of Energy Storage 11 (2017), Seiten 119 - 153, verwiesen.

Die Publikation "Acceleration of the reduction of carbon dioxide in the presence of multivalent cations", Schizodimou Agoritsa et al., ELECTROCHIMICA ACTA, Bd. 78, S. 171-176, XP028931903, ISSN: 0013-4686, DOI: 10.1016/J.ELECTACTA.2012.05.118 beschreibt eine Kathode aus einer Legierung mit 88 Gew.-% Kupfer und jeweils 6 Gew.-% Zinn und Blei, welche für eine Verwendung mit einem organischen Elektrolyten geeignet ist. Der Oberbegriff von Anspruch 1 basiert auf dieser Publikation.

Die DE 10 2009 018 028 B3 offenbart eine Elektrode für elektrolytische Prozesse und Redoxbatterien mit dieser. Die Elektrode weist einen metallischen Träger mit einer damit elektrisch leitendend verbundenen porösen Sintermetallschicht auf, die eine dünne, elektrische leitende gesputterte Graphitschicht trägt.

Es ist Aufgabe der Erfindung, eine Elektrode zur Anordnung in Kontakt zu einem wässrigen organischen Elektrolyten in einer Redox-Flow-Zelle bereitzustellen, die korrosionsstabil ist und bei geringen Dicken-Abmessungen kostengünstig herzustellen ist. Weiterhin ist es Aufgabe der Erfindung, eine Redox-Flow-Zelle mit einer solchen Elektrode bereitzustellen. Weiterhin soll eine Redox-Flow-Batterie bereitgestellt werden.

Die Aufgabe wird für die Elektrode zur Anordnung in Kontakt zu einem wässrigen organischen Elektrolyten gemäß Anspruch 1 gelöst. Die Elektrode ist umfassend ein Substrat ausgebildet, das aus einem Elektrodenmaterial in Form eines Metallblechs und/oder eines Streckmetallgitters gebildet ist, wobei das Elektrodenmaterial aus einer Kupfer-Zinn-Legierung umfassend 4 bis 10 Gew.-% Zinn gebildet ist. Erfindungsgemäß ist die Elektrode zumindest auf ihrer, dem Elektrolyten zugewandten Oberfläche anodisiert.

Die erfindungsgemäße Elektrode ist im neutralen und stark alkalischen, gegenüber einem wässrigen organischen Elektrolyten einer Redox-Flow-Zelle mit seinem Aktivmaterial elektrochemisch stabil. Sie weist geringe Überspannungen gegenüber den erforderlichen Reaktionen in den Elektrolyten (sog. katalytische Aktivität) sowie geringste Grenzflächenwiderstände vergleichbar mit denen von Goldbeschichtungen auf. Die Elektrode ist zudem kostengünstig mit wenigen Herstellschritten produzierbar.

Es hat sich nämlich gezeigt, dass in dieser Umgebung nicht jede Kupfer-Zinn-Legierung eine ausreichend hohe Korrosionsbeständigkeit aufweist. Es haben sich hier vor allem Zinnbronzen enthaltend 4 bis 10 Gew.-% Zinn als hervorragend geeignet erwiesen. Weiterhin können unvermeidbare Verunreinigungen im ppm-Bereich in der Kupfer-Zinn-Legierung vorhanden sein. Ein Zusatz mindestens eines weiteren Metalls, wie beispielsweise Zink und/oder Blei, mit einem Gehalt aller weiteren Metalle von insgesamt nicht mehr als 1 Gew.-% ist möglich.

Kupfer-Zinn-Legierungen sind für ihre sehr gute Verarbeitbarkeit bekannt. Damit verbunden ist eine sehr gute Kaltumformbarkeit, eine ausgezeichnete Eignung für ein Galvanisieren, sowie eine gute Eignung für ein Widerstandsschweißen oder ein Laserschweißen. Das Material ist kommerziell erhältlich in Banddicken ab 0,1 mm und erfüllt damit die bestehenden Produktanforderungen an eine Elektrode, hier insbesondere für eine Redox-Flow-Zelle oder Redox-Flow-Batterie.

Besonders bevorzugt als Elektrodenmaterial ist eine Kupfer-Zinn-Legierung mit 6 Gew.-% Zinn und Rest Kupfer (CuSn6). Eine aus einem solchen Elektrodenmaterial gebildete Elektrode erzielt in Zelltests einen Zellwiderstand von 5,5 bis 7,5 Ωcm² in wässrigen organischen Elektrolyten mit einem pH-Wert im Bereich von 7 bis 14. Der Flächenwiderstand einer solchen Elektrode lag bei circa 2,3 mΩ (gemessen bei 24°C). Zudem lassen sich Ladeleistungen erzielen, die um bis zu einen Faktor 3 höher als bisher liegen im Vergleich zu Elektroden aus beschichtetem Edelstahl. Der Effekt basiert auf dem Einsatz von Kupfer als katalytischen Werkstoff, wobei vermutet wird, dass durch das Zinn eine Steigerung der elektrochemischen Stabilität sowie der katalytischen Aktivität durch die Bildung von Zinn(II)-Oxiden erreicht wird. Aktuell wird davon ausgegangen, dass eine erfindungsgemäße Elektrode eine mindestens gleichwertige Leistung erreicht wie Elektroden auf Basis von Komposit (PP)-Grafitplatten (Dicke ~0,5 - 0,6 mm) mit beidseitig aufgebrachter Aktivschicht auf Basis von Kohlenstoff.

Je nach Dimension einer Elektrode ist es vorteilhaft, zur Sicherstellung der mechanischen Stabilität der Elektrode mit zunehmender Fläche der Kontaktbereiche zum Elektrolyten auch die Dicke der Elektrode zu erhöhen. So sind für Elektroden prinzipiell Metallbleche und Streckmetallgitter aus Kupfer-Zinn-Legierungen ab einer Dicke von 0,1 mm verwendbar. Es hat sich aber bewährt, wenn das Metallblech und das Streckmetallgitter jeweils in einer Dicke von maximal 5 mm ausgebildet ist.

In einer bevorzugten Ausführungsform der Elektrode weist das Metallblech und/oder das Streckmetallgitter zumindest bereichsweise eine dreidimensionale Profilierung auf. Dies erhöht die später zur Verfügung stehende Kontaktfläche des Metallblechs oder Streckmetallgitters zu einem Elektrolyten.

Das Substrat kann lediglich ein Metallblech, lediglich ein Streckmetallgitter (gegebenenfalls in Kombination mit einer elektrisch leitenden, nicht von Elektrolyt durchdringbaren Stützplatte, z.B. aus Nickel oder Graphit-Komposit) oder eine Kombination von Metallblech und Streckmetallgitter umfassen.

Sofern nur ein Streckmetallgitter vorgesehen ist, das von einem Elektrolyten durchströmbar ist, kann dieses zu einem Wickel aufgerollt, in Lagen übereinander gestapelt oder einlagig vorgesehen sein.

Bei einer Kombination eines Metallblechs mit einem Streckmetallgitter wird das Streckmetallgitter dem Elektrolyten zugewandt angeordnet, wobei vorzugsweise lediglich eine Klemmung zwischen Metallblech und Streckmetallgitter erfolgt. Allerdings kann das Streckmetallgitter zur Vereinfachung einer späteren Montage der Elektrode in einer Redox-Flow-Zelle auch über einzelne Schweißpunkte an dem Metallblech angeheftet oder stellenweise mit dem Metallblech verklebt oder verlötet sein.

Bevorzugt weist das Substrat einseitig oder vorzugsweise beidseitig zumindest bereichsweise eine dreidimensionale Profilierung unter Ausbildung eines Flussfeldes auf. Die Einbringung eines solches Flussfeldes in ein Substrat ist durch Prägen oder dergleichen in kostengünstiger Weise möglich. Ein solches Flussfeld lenkt die Strömung des Elektrolyten in definierte Bahnen und ist gleichbedeutend mit einer dreidimensionalen Struktur im Bereich der Oberfläche des Substrats. Es sorgt für eine homogene Verteilung und Strömung des Elektrolyten an und entlang der Membran.

In einer nicht erfindungsgemäßen Ausführungsform umfasst eine Elektrode aus einem Elektrodenmaterial aus einer Kupfer-Zinn-Legierung mit 4 bis 10 Gew.-% Zinn bevorzugt weiterhin eine Beschichtung, welche auf dem Substrat aufgebracht ist, wobei die Beschichtung entweder
a) aus Kohlenstoff oder Edelmetall oder einer Edelmetall-Legierung oder einem Metallnitrid oder mindestens einem Material aus der Gruppe umfassend Hafnium, Niob, Tantal, Bismut, Nickel, Zinn, Zinn-Nickel-Legierung, gebildet ist oder
b) aus einer homogenen oder heterogenen festen Lösung oder Verbindung aus mindestens einer der Materialienkombinationen aus der Gruppe gebildet ist umfassend: Ir-C, Ir-Ru-C, Ru-C, Ag-C, W-C, Cu-C, Mo-C, Cr-C, Mg-C, Pt-C, Ta-C, Nb-C, wobei ein Anteil an Kohlenstoff in der Beschichtung (3) im Bereich von 35 bis 99,99 At.-% liegt oder
c) aus einer Beschichtung (3) aus einer Zinn-Nickel-Legierung oder einer Zinn-SilberLegierung oder einer Zinn-Zink-Legierung oder einer Zinn-Bismut-Legierung oder einer Zinn-Antimon-Legierung gebildet ist.

Weiterhin können in dieser Beschichtung für die nicht erfindungsgemäße Elektrode Spuren von Wasserstoff, Stickstoff, Bor, Fluor oder Sauerstoff vorhanden sein.

Eine solche Beschichtung verbessert die chemische Stabilität der Elektrode weiterhin und verlängert deren Lebensdauer signifikant.

Die Beschichtung der nicht erfindungsgemäßen Elektrode weist insbesondere eine Dicke im Bereich von 2 bis 500 nm auf.

Es hat sich bewährt, wenn hinsichtlich der nicht erfindungsgemäßen Elektrode die Beschichtung das Substrat zumindest einseitig, bevorzugt beid- oder allseitig bedeckt. Insbesondere im Bereich der Kanten eines Metallblechs können unbeschichtete Bereiche oder Bereiche mit sehr geringer Schichtdicke vorliegen, die allerdings üblicherweise aufgrund der Trennung der Elektrolyträume nicht in Kontakt mit einem Elektrolyten stehen und daher unkritisch sind. Zumindest sollte hinsichtlich der nicht erfindungsgemäßen Elektrode die Beschichtung das Substrat in einem Kontaktbereich zu einem Elektrolyten der Redox-Flow-Zelle bedecken, also in einem Bereich, der in direktem Kontakt zu einem Anolyten oder Katholyten eingesetzt wird.

Hinsichtlich der nicht erfindungsgemäßen Elektrode ist die Beschichtung vorzugsweise mittels eines PVD-Verfahrens oder eines kombinierten PVD/PACVD-Verfahrens auf dem Substrat gebildet. Dabei ist es von Vorteil, wenn die Beschichtung möglichst porenfrei abgeschieden ist oder zumindest nur Poren mit einem Durchmesser kleiner 0,1 mm aufweist, um einen korrosiven Angriff des Elektrolyten auf das Substrat weiter zu verringern. Die Beschichtung kann aber auch durch ein alternatives Beschichtungsverfahren, beispielsweise galvanisch oder durch thermisches Spritzen, aufgebracht werden.

Hinsichtlich der nicht erfindungsgemäßen Elektrode kann die Beschichtung weiterhin in Form einer Plattierung vorliegen, sofern diese metallisch ausgebildet wird. Als Plattieren bezeichnet man in der Metallbearbeitung das ein- bzw. zweiseitige Aufbringen einer oder mehrerer Metalllage(n) auf ein dazu unterschiedliches Grundmetall. Dabei wird eine untrennbare Verbindung durch Druck und/oder Temperatur bzw. nachfolgende Wärmebehandlung (z. B. Diffusionsglühen) erzielt. Das Plattieren kann insbesondere durch ein Aufwalzen von dünner Metallfolie erfolgen.

Dabei hat es sich bewährt, wenn die nicht erfindungsgemäße Elektrode aus einem Metallblech aus einer Kupfer-Zinn-Legierung gebildet wird, die ein- oder beidseitig mit einer Beschichtung versehen wird, die durch Plattieren mit einem der in Gruppe a) oben genannten metallischen Werkstoffe für die Beschichtung, insbesondere durch Zinn, gebildet wird.

Die Aufgabe wird weiterhin für die Redox-Flow-Zelle, insbesondere Redox-Flow-Batterie, gelöst, umfassend mindestens eine erfindungsgemäße Elektrode und mindestens einen wässrigen organischen Elektrolyten mit einem pH-Wert im Bereich von 7 bis 14 als Anolyten, sowie einen wässrigen Katholyten, wobei die mindestens eine Elektrode zumindest in Kontakt zum Anolyten angeordnet ist.

Die Redox-Flow-Zelle umfasst insbesondere mindestens zwei Elektroden, einen ersten Reaktionsraum enthaltend den Anolyten und einen zweiten Reaktionsraum enthaltend den Katholyten, wobei jeder Reaktionsraum in Kontakt mit einer der Elektroden steht und wobei die Reaktionsräume durch eine Polymerelektrolytmembran voneinander getrennt sind. Der Einsatz der erfindungsgemäßen Elektrode ermöglicht geringe Abstände zur Membran und damit einen platzsparenden Aufbau einer Redox-Flow-Zelle.

Die erfindungsgemäße Elektrode ist undurchlässig für die Elektrolyte, so dass eine einwandfreie Trennung der Reaktionsräume innerhalb einer Redox-Flow-Zelle gewährleistet ist. Gleichzeitig weisen derartige Elektroden Oberflächen auf, die neben den hohen Anforderungen an die elektrochemische Stabilität auch den Forderungen nach einem niedrigen Grenzflächenwiderstand sowie hoher katalytischer Aktivität gerecht werden.

Insbesondere Flussbatterien mit einem wässrigen organischen Elektrolyten umfassend eine redox-aktive Spezies auf der Anolyt-Seite sind bevorzugte Anwendungen für die erfindungsgemäße Elektrode.

Die genannte Kupfer-Zinn-Legierung enthaltend 4 bis 10 Gew.-% Zinn ist in diesem Umfeld elektrochemisch besonders stabil und weist einem niedrigen Grenzflächenwiderstand sowie eine hohe katalytische Aktivität auf. Es können weiterhin Metalle in einem Gehalt von maximal 1 Gew.-%, wie beispielsweise Zink und/oder Blei vorhanden sein. Weiterhin können unvermeidbare Verunreinigungen im ppm-Bereich in der Kupfer-Zinn-Legierung vorhanden sein.

Es können aufgrund der geringen möglichen Dicken der Elektroden kleinbauende Redox-Flow-Batterien hergestellt werden, die zudem einen geringen Herstellungspreis aufweisen. So werden zur Ausbildung einer erfindungsgemäßen Redox-Flow-Batterie bevorzugt mehr als 10, insbesondere mehr als 50 Redox-Flow-Zellen elektrisch miteinander verschaltet eingesetzt.

Als für eine Redox-Flow-Zelle oder eine Redox-Flow-Batterie geeigneter Anolyt wird hier beispielhaft genannt:
1.4 M 7,8-Dihydroxyphenazin-2-sulfonsäure (kurz: DHPS)
gelöst in 1 molarer Natronlauge

Als für eine Redox-Flow-Zelle oder eine Redox-Flow-Batterie geeigneter Katholyt wird hier beispielhaft genannt:
0.31 M Kaliumhexacyanoferrat(II) und 0.31 M Kaliumhexacyanoferrat(III)
gelöst in 2 molarer Natronlauge.

Es werden hier bevorzugt Elektrolyt-Kombinationen mit wässrigen Elektrolyten mit einer redox-aktiven organischen Spezies auf der Anolyt-Seite zur Bildung einer Redox-Flow-Zelle oder einer Redox-Flow-Batterie verwendet.

Die Figuren 1 bis 7 zeigen beispielhaft erfindungsgemäße wie auch nicht erfindungsgemäße Elektroden und eine Redox-Flow-Zelle beziehungsweise eine Redox-Flow-Batterie. So zeigt
- Figur 1: eine Elektrode umfassend ein Substrat in der Draufsicht auf die Substratebene,
- Figur 2: einen Querschnitt durch eine nicht erfindungsgemäße Elektrode umfassend eine Beschichtung,
- Figur 3: einen Querschnitt durch eine Elektrode mit einer Profilierung,
- Figur 4: einen Querschnitt durch eine Elektrode umfassend ein Substrat aus einem Metallblech und einem Streckmetallgitter,
- Figur 5: eine Elektrode mit einem Flussfeld,
- Figur 6: eine Redox-Flow-Zelle beziehungsweise eine Redox-Flow-Batterie mit einer Redox-Flow-Zelle, und
- Figur 7: eine Polarisationskurve einer Elektrode aus CuSn6.

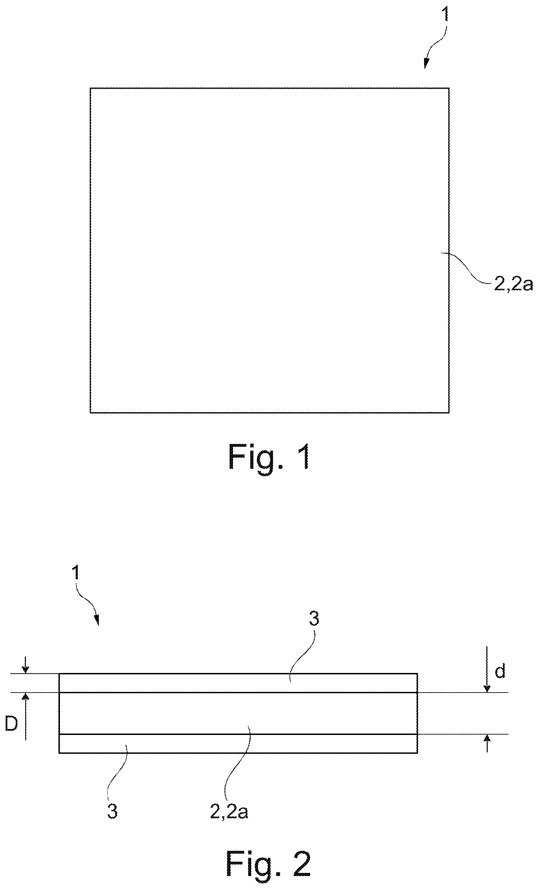

Figur 1 zeigt eine Elektrode 1 umfassend ein Substrat 2 in der Draufsicht auf die Substratebene. Das Substrat 2 ist hier aus einem Metallblech 2a in einer Dicke kleiner 0,5 mm gebildet. Das Metallblech 2a ist aus einer Kupfer-Zinn-Legierung (Zinnbronze) mit einem Zinn-Gehalt von 6 Gew.-% gebildet.

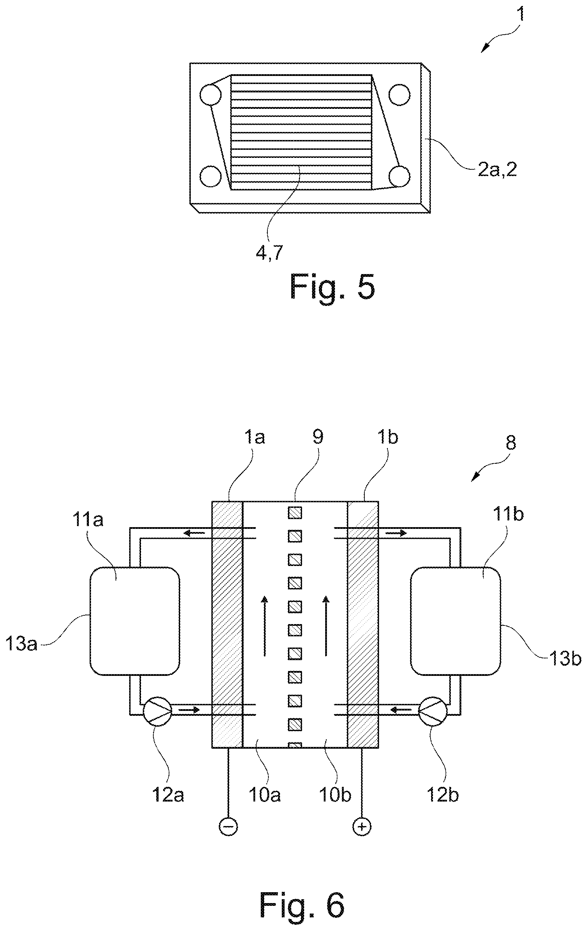

Figur 2 zeigt einen Querschnitt durch eine nicht erfindungsgemäße Elektrode 1 umfassend ein Substrat 2 in Form eines Metallblechs 2a aus einer Kupfer-Zinn-Legierung, das beidseitig eine Beschichtung 3 aufweist. Dabei kann die Beschichtung 3 aber auch nur auf einer Seite des Metallblechs 2a aufgebracht sein, wobei die Beschichtung 3 das Substrat 2 zumindest in einem Kontaktbereich zu einem Elektrolyten der Redox-Flow-Zelle 8 bedecken soll (vergleiche Figur 6).

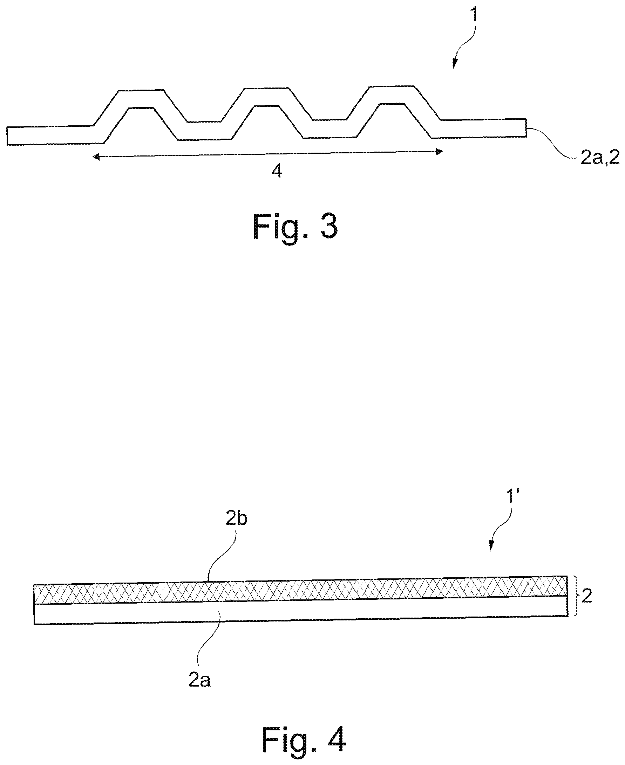

Figur 3 zeigt einen Querschnitt durch eine Elektrode 1 umfassend ein Substrat 2 in Form eines Metallblechs 2a aus Zinnbronze. Das Metallblech 2a weist eine dreidimensionale Profilierung 4 auf, die die spätere Kontaktfläche des Metallblechs 2a zu einem Elektrolyten erhöht.

Figur 4 zeigt einen Querschnitt durch eine Elektrode 1' umfassend ein Substrat 2, das ein Metallblech 2a und ein Streckmetallgitter 2b umfasst. Das Metallblech 2a und das Streckmetallgitter 2b sind aus einer Kupfer-Zinn-Legierung (Zinnbronze) mit einem Zinn-Gehalt von 6 Gew.-% gebildet.

Figur 5 zeigt eine Elektrode 1 in dreidimensionaler Ansicht umfassend ein Substrat 2 in Form eines Metallblechs 2a aus Zinnbronze mit einer Profilierung 4, die ein Flussfeld 7 ausbildet. In dem Substrat 2 ist beidseitig eine Profilierung 4 zur Ausbildung jeweils eines Flussfeldes 7 vorhanden, so dass eine dreidimensionale Strukturierung der Oberfläche der Elektrode 1 resultiert, die in einer Redox-Flow-Zelle von einem Elektrolyten angeströmt werden soll.

Figur 6 zeigt eine Redox-Flow-Zelle 8 beziehungsweise eine Redox-Flow-Batterie mit einer Redox-Flow-Zelle 8. Die Redox-Flow-Zelle 8 umfasst zwei Elektroden 1a, 1b, einen ersten Reaktionsraum 10a und einen zweiten Reaktionsraum 10b, wobei jeder Reaktionsraum 10a, 10b in Kontakt mit einer der Elektroden 1a, 1b steht. Die Reaktionsräume 10a, 10b sind durch eine Polymerelektrolytmembran 9 voneinander getrennt. Ein flüssiger Anolyt 11a wird aus einem Tank 13a über eine Pumpe 12a in den ersten Reaktionsraum 10a gepumpt und zwischen der Elektrode 1a und der Polymerelektrolytmembran 9 hindurchgeführt. Ein flüssiger Katholyt 11b wird aus einem Tank 13b über eine Pumpe 12b in den zweiten Reaktionsraum 10b gepumpt und zwischen der Elektrode 1b und der Polymerelektrolytmembran 9 hindurchgeführt. Es erfolgt ein Ionentausch über die Polymerelektrolytmembran 9 hinweg, wobei aufgrund der Redox-Reaktion an den Elektroden 1a, 1b elektrische Energie frei wird.

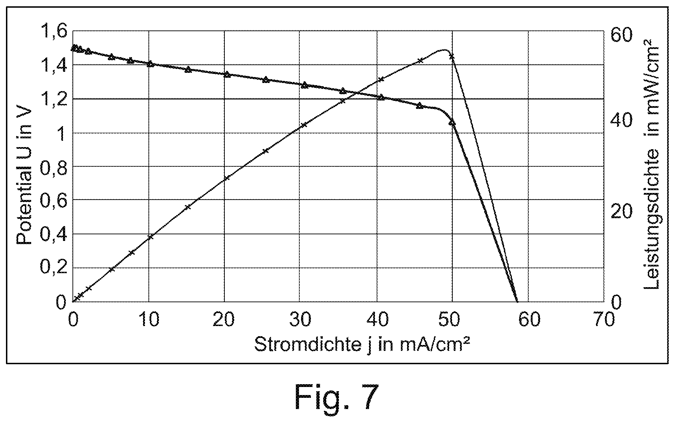

Figur 7 zeigt eine Polarisationskurve einer Elektrode aus dem Elektrodenmaterial CuSn6 in Form eines Metallblechs. Gezeigt ist der Polarisationsverlauf und das Leistungsvermögen des Metallbleches aus CuSn6 ohne Profilierung in einer Einzelzelle mit einem alkalischen Elektrolyten. Es wird ein Zellwiderstand von 6 Ωcm² und eine maximale Leistungsdichte von 55 mW/cm² erreicht. Das besondere Leistungsvermögen der Elektrode äußert sich in der niedrigen Steigung des linearen Bereichs der Spannungskurve im Bereich von 10 bis 40 mA/cm².

### Bezugszeichenliste

- 1, 1', 1a, 1b: Elektrode
- 2: Substrat
- 2a: Metallblech
- 2b: Streckmetallgitter
- 3: Beschichtung
- 4: Profilierung
- 7: Flussfeld
- 8: Redox-Flow-Zelle oder Redox-Flow-Batterie
- 9: Polymerelektrolytmembran
- 10a: erster Reaktionsraum
- 10b: zweiter Reaktionsraum
- 11a: Anolyt
- 11b: Katholyt
- 12a, 12b: Pumpe
- 13a, 13b: Tank
- d: Dicke des Metallblechs oder Streckmetalls
- D: Dicke der Beschichtung

## Patentansprüche

1. Elektrode (1, 1', 1a, 1b) zur Anordnung in Kontakt zu einem wässrigen organischen Elektrolyten in einer Redox-Flow-Zelle (8), wobei die Elektrode (1, 1', 1a, 1b) umfassend ein Substrat (2) ausgebildet ist, das aus einem Elektrodenmaterial in Form eines Metallblechs (2a) und/oder eines Streckmetallgitters (2b) gebildet ist, und wobei das Elektrodenmaterial aus einer Kupfer-Zinn-Legierung umfassend 4 bis 10 Gew.-% Zinn gebildet ist,
**dadurch gekennzeichnet, dass** die Elektrode (1, 1', 1a, 1b) zumindest auf ihrer, dem Elektrolyten zugewandten Oberfläche anodisiert ist.

2. Elektrode (1, 1', 1a, 1b) nach Anspruch 1, wobei das Metallblech (2a) und das Streckmetallgitter (2b) jeweils in einer Dicke von maximal 5 mm ausgebildet ist.

3. Elektrode (1, 1', 1a, 1b) nach einem der Ansprüche 1 oder 2, wobei das Metallblech (2a) und/oder das Streckmetallgitter (2b) zumindest bereichsweise eine dreidimensionale Profilierung (4) aufweist.

4. Redox-Flow-Zelle (8), insbesondere Redox-Flow-Batterie, umfassend mindestens eine Elektrode (1, 1', 1a, 1b) nach einem der Ansprüche 1 bis 3, einen wässrigen organischen Elektrolyten mit einem pH-Wert im Bereich von 7 bis 14 als Anolyten, sowie einen wässrigen Katholyten, wobei die mindestens eine Elektrode (1, 1', 1a, 1b) zumindest in Kontakt zum Anolyten angeordnet ist.

5. Redox-Flow-Zelle (8) nach Anspruch 4, umfassend mindestens zwei Elektroden (1a, 1b), einen ersten Reaktionsraum (10a) enthaltend den Anolyten und einen zweiten Reaktionsraum (10b) enthaltend den Katholyten, wobei jeder Reaktionsraum (10a, 10b) in Kontakt mit einer der Elektroden (1a, 1b) steht und wobei die Reaktionsräume (10a, 10b) durch eine Polymerelektrolytmembran (9) voneinander getrennt sind.

6. Redox-Flow-Batterie nach Anspruch 4 oder 5, umfassend mindestens 10 Redox-Flow-Zellen (8), die elektrisch miteinander verschaltet sind.

## Claims

1. An electrode (1, 1', 1a, 1b) for arrangement in contact with an aqueous organic electrolyte in a redox flow cell (8), wherein the electrode (1, 1', 1a, 1b) comprising a substrate (2) is formed from an electrode material in the form of a metal sheet (2a) and/or an expanded metal grid (2b), and wherein the electrode material is formed from a copper-tin alloy comprising 4 to 10 wt.% tin,
**characterized in that** the electrode (1, 1', 1a, 1b) is anodized at least on its surface facing the electrolyte.

2. The electrode (1, 1', 1a, 1b) according to claim 1, wherein the metal sheet (2a) and the expanded metal grid (2b) are each formed with a thickness of at most 5 mm.

3. The electrode (1, 1', 1a, 1b) according to either one of claims 1 or 2, wherein the metal sheet (2a) and/or the expanded metal grid (2b) has, at least in sections, a three-dimensional profile (4).

4. A redox flow cell (8), in particular a redox flow battery, comprising at least one electrode (1, 1', 1a, 1b) according to any one of claims 1 to 3, an aqueous organic electrolyte having a pH value in the range of 7 to 14 as an anolyte, and an aqueous catholyte, wherein the at least one electrode (1, 1', 1a, 1b) is arranged at least in contact with the anolyte.

5. The redox flow cell (8) according to claim 4, comprising at least two electrodes (1a, 1b), a first reaction chamber (10a) containing the anolyte and a second reaction chamber (10b) containing the catholyte, wherein each of the reaction chambers (10a, 10b) is in contact with one of the electrodes (1a, 1b) and wherein the reaction chambers (10a, 10b) are separated from each other by a polymer electrolyte membrane (9).

6. A redox flow battery according to claim 4 or 5, comprising at least 10 redox flow cells (8), which are electrically interconnected with each other.

## Revendications

1. Électrode (1, 1', 1a, 1b) destinée à être mise en contact avec un électrolyte organique aqueux dans une cellule à flux redox (8), l'électrode (1, 1', 1a, 1b) comprenant un substrat (2) qui est formé d'un matériau d'électrode sous forme d'une tôle (2a) et/ou d'un treillis métallique déployé (2b), et le matériau d'électrode étant formé d'un alliage cuivre-étain comprenant 4 à 10 % en poids d'étain,
**caractérisée en ce que** l'électrode (1, 1', 1a, 1b) est anodisée au moins sur sa surface tournée vers l'électrolyte.

2. Électrode (1, 1', 1a, 1b) selon la revendication 1, dans laquelle la tôle (2a) et le treillis métallique déployé (2b) sont chacun formés avec une épaisseur de 5 mm maximum.

3. Électrode (1, 1', 1a, 1b) selon l'une quelconque des revendications 1 ou 2, dans laquelle la tôle (2a) et/ou le treillis métallique déployé (2b) présentent au moins à certains endroits un profilage tridimensionnel (4).

4. Cellule à flux redox (8), en particulier batterie à flux redox, comprenant au moins une électrode (1, 1', 1a, 1b) selon l'une quelconque des revendications 1 à 3, un électrolyte organique aqueux ayant un pH dans la plage allant de 7 à 14 comme anolyte, ainsi qu'un catholyte aqueux, l'au moins une électrode (1, 1', 1a, 1b) étant mise au moins en contact avec l'anolyte.

5. Cellule à flux redox (8) selon la revendication 4, comprenant au moins deux électrodes (1a, 1b), un premier espace de réaction (10a) contenant l'anolyte et un second espace de réaction (10b) contenant le catholyte, chaque espace de réaction (10a, 10b) étant en contact avec l'une des électrodes (1a, 1b) et les espaces de réaction (10a, 10b) étant séparés l'un de l'autre par une membrane polymère ionique (9).

6. Batterie à flux redox selon la revendication 4 ou 5, comprenant au moins 10 cellules à flux redox (8) connectées électriquement entre elles.
